# EUROPÄISCHE PATENTSCHRIFT

(11) **EP 3 847 426 B1**
(45) Veröffentlichungstag und Bekanntmachung des Hinweises auf die Patenterteilung: **28.08.2024**
(21) Anmeldenummer: 19857130.9
(22) Anmeldetag: 06.09.2019
(51) Int. Cl.: G01G 13/28, G01F 1/00, G05D 7/06

(54) **VERFAHREN ZUR GRAVIMETRISCHEN REGELUNG EINES DOSIERERS FÜR SCHÜTTGUT WÄHREND DER NACHFÜLLUNG SEINES VORRATSBEHÄLTERS UND DOSIERER ZUR AUSFÜHRUNG DES VERFAHRENS**
METHOD FOR THE GRAVIMETRIC CONTROL OF A METERING DEVICE FOR BULK MATERIAL DURING THE REFILLING OF ITS STORAGE CONTAINER, AND METERING DEVICE FOR CARRYING OUT THE METHOD
PROCÉDÉ POUR LA RÉGULATION GRAVIMÉTRIQUE D'UN DOSEUR POUR UN PRODUIT EN VRAC PENDANT LE REMPLISSAGE DU RÉSERVOIR DE STOCKAGE DE CELUI-CI ET DOSEUR POUR LA MISE EN OEUVRE DU PROCÉDÉ

(30) Priorität: 07.09.2018 CH 10642018; 19.12.2018 CH 15662018; 28.12.2018 CH 16122018
(43) Veröffentlichungstag der Anmeldung: 14.07.2021
(73) Patentinhaber: K-TRON Technologies, Inc., Sewell, NJ 08080 (US)
(72) Erfinder: HELFENSTEIN, Urs, 5033 Buchs (CH); LUDESCHER, Stefan, 4655 Stüsslingen (CH)
(74) Vertreter: Stump, Beat
(86) Internationale Anmeldenummer: PCT/IB2019/057521
(87) Internationale Veröffentlichungsnummer: WO 2020/049513

(56) Entgegenhaltungen:
- WO-A1-99/63310
- WO-A2-2016/150923
- FR-A1- 2 572 520
- JP-A- S60 149 926
- US-A- 3 164 217
- US-A- 3 659 665
- US-A- 4 529 050
- US-A- 5 730 153
- US-A- 6 155 767
- US-A1- 2004 060 367
- US-A1- 2010 269 954
- US-A1- 2015 353 293
- K-TRON: "Smart Refill Technologyin Loss-in-Weight Feeding", INTERNET CITATION, 8 November 2011 (2011-11-08), pages 1 - 5, XP002693589, Retrieved from the Internet <URL:http://www.ptonline.com/cdn/cms/uploadedFiles/Ktron-Smart_Refill.pdf> [retrieved on 20130312]

## Beschreibung

Die vorliegende Erfindung betrifft ein Verfahren zum Regeln des Massenstroms eines Dosierers für Schüttgüter nach dem Oberbegriff von Anspruch 1 und einen Dosierer zur Ausführung dieses Verfahrens nach dem Oberbegriff von Anspruch 12.

Die auch als Differentialdosierwaagen bekannten gravimetrische Dosierer sind weit verbreitet und werden in vielen Industriezweigen eingesetzt, für alle möglichen schüttfähigen Materialien, d.h. Schüttgüter, soweit diese überhaupt durch einen gravimetrischen Dosierer förderbar sind. Dabei werden die schüttfähigen Materialien in einen Vorratsbehälter und dann über einen Ausgabe-Förderer dosiert aus diesem ausgegeben. Der Dosierer befindet sich auf einer Waage, somit ist das von der Waage registrierte Gewicht das Bruttogewicht, d.h. das bekannte und konstante Gewicht der Komponenten des Dosierers (Tara) plus das variable Gewicht des im Vorratsbehälter aktuell vorhandenen Schüttguts (Nettogewicht).

Damit registriert die Waage im Betrieb des Dosierers laufend die Gewichtsabnahme des ganzen Dosierers, und damit wegen des konstanten Gewichts des Dosierers die Gewichtsabnahme im Vorratsbehälter, so dass eine Steuerung des Dosierers aus der Gewichtsabnahme den ausgegebenen Ist-Massenstrom des schüttfähigen Materials bestimmen und im Vergleich mit einem vorbestimmten Soll-Massenstrom den Ausgabe-Förderer entsprechend regeln kann, um die Differenz zwischen dem Ist- und dem Soll-Massenstrom zu minimieren.

Dabei kann eine sehr genaue Regelung des ausgegebenen Massenstroms notwendig sein, etwa im Bereich der Pharmazie oder wenn in der industriellen Produktion Farbpigmente zugemischt werden sollen. Zudem kann der Soll-Massenstrom klein ausfallen, etwa bei den genannten Farbpigmenten und in der Medikamentenherstellung, oder gross, etwa im Bereich der Kunststoffherstellung und im Bergbau.

Soll der aus dem Dosierer ausgegebene Massenstrom ohne Unterbrechung fortgesetzt werden, muss der Vorratsbehälter periodisch bei laufender Dosierung nachgefüllt werden. Eine Nachfüllstation füllt dann diesen mit Schüttgut auf, sobald gravimetrisch (d.h. über die Gewichtsabnahme im Vorratsbehälter) ein vorbestimmter unterer Füllstand in diesem erkannt wird, und stoppt die Nachfüllung, sobald der Vorratsbehälter sein Füllgewicht erreicht hat oder die durch einen Pegelstand im Nachfüllbehälter abgemessene Menge in den Vorratsbehälter ausgegeben worden ist. In der Regel befindet sich die Nachfüllstation über dem Vorratsbehälter, so dass für die Nachfüllung beispielsweise ein Schieber oder ein anders ausgebildetes Ventil in der Leitung zwischen dem Vorratsbehälter und der Nachfüllstation geöffnet und wieder geschlossen werden kann.

Während der Nachfüllung ist die gravimetrische Steuerung blind, da die Waage nicht mehr eine dem ausgegebenen Ist-Massenstrom entsprechende Abnahme des Gewichts registriert, sondern eine von erheblichen Störungen geprägte Zunahme des Gewichts. Je nach dem dynamischen Verhalten der verwendeten Waage dauern diese Störungen über das Ende der Nachfüllung kürzer oder länger fort, so dass die gravimetrische Dosierung erst wieder aufgenommen werden kann, wenn sich die Waage nach beendeter Nachfüllung wieder beruhigt hat. Dieses blinde Zeitfenster kann etwa 5 Sekunden bis 5 Minuten dauern, je nach der Art des Schüttguts, dem Soll-Massenstrom und dem verwendeten Dosierer bzw. der verwendeten Nachfüllstation.

Da im Stand der Technik während der Nachfüllung die gravimetrische Dosierung nicht möglich ist, wird auf eine volumetrische Steuerung zurückgegriffen, d.h. der Ausgabe-Förderer wird über das von ihm geförderte Schüttgutvolumen gesteuert, wobei dann der Natur der Sache nach beispielsweise die Dichte bzw. Verdichtung des Schüttguts unberücksichtigt bleibt. Am Beispiel der häufig eingesetzten Schneckenförderer bedeutet dies, dass die Steuerung der Schneckendrehzahl nach dem Volumen des Soll-Massenstroms eingestellt wird, also nach dem Volumen zwischen den Windungen der Schnecke (volumetrische Förderung) und nicht mehr nach der Gewichtsabnahme des Vorratsbehälters (gravimetrische Förderung).

Die volumetrische Förderung besitzt den Nachteil, dass im Gegensatz zur gravimetrischen Steuerung das fluiddynamische Verhalten des durch Nachfüllung und Dosierung bewegten Schüttguts selbst nicht erfasst werden kann, d.h. der volumetrisch gesteuerte Massenstrom von Schüttgut grundsätzlich nicht regelbar ist, wenn von der blossen Regelung der Drehzahl der Förderschnecken bzw. der Arbeitsgeschwindigkeit des Ausgabe-Förderers abgesehen wird.

Das Verhalten des bewegten Schüttguts hat jedoch einen bestimmenden Einfluss auf den volumetrisch erzeugten Massenstrom: beispielsweise verdichten wie oben erwähnt verschiedene Schüttgüter unter Druck stark (andere weniger), so dass deren Masse pro Volumeneinheit abhängig ist vom Füllstand des Vorratsbehälters, was bei einer volumetrischen Förderung einen unterschiedlichen Massenstrom je nach dem Füllstand zur Folge hat.

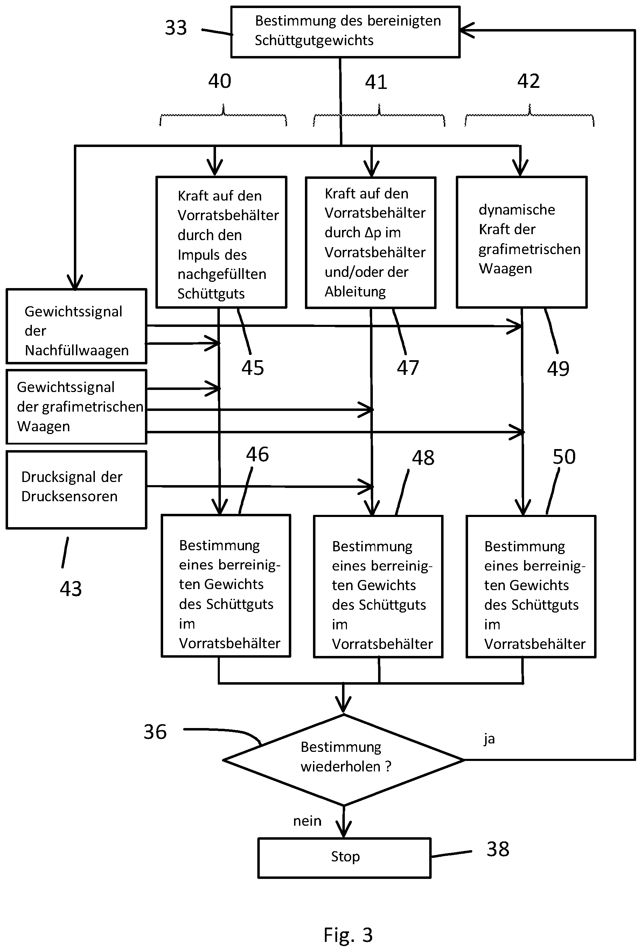

Der Prospekt "K-Tron Smart Refill Technology" aus 2009 zeigt auf Seite 2, Figur 3 "Dynamics of the refill operation" ein volumetrisches Steuermodell für den Ausgabe-Förderer, welches die Verdichtung des Schüttguts unten im Bereich der Förderschnecke berücksichtigt, die sich aus der Höhe der Materialsäule, d.h. dem Füllstand des Vorratsbehälters ergibt. Während der gravimetrischen Förderung regelt die gravimetrische Steuerung die Schneckendrehzahl bei hohem Füllstand (d.h. verdichtetem Schüttgut) herunter und steigert diese dann wiederum mit abnehmendem Füllstand (d.h. abnehmender Verdichtung). Damit kann während der Leerung des Vorratsbehälters jedem Füllstand eine Schneckendrehzahl zugeordnet werden. Für die Nachfüllung, wenn eine Nachfüllstation Pulver schnell und in grosser Menge in den Vorratsbehälter ausgibt, wird nun eine geeignete Kurve für den Anstieg des Füllstands angenommen (in der Regel eine Gerade) und dieser Füllstandkurve jeweils die während der Leerung des Vorratsbehälters festgestellte Schneckendrehzahl zugeordnet, womit die Schneckendrehzahl während der Nachfüllung entsprechend sinkt, bis der Vorratsbehälter gefüllt ist. Der Fehler während der volumetrischen Förderung ist entsprechend gegenüber einer konstanten Schneckendrehzahl verringert, jedoch nicht behoben, da die wahren Verhältnisse im Vorratsbehälter während der Nachfüllung nach wie vor unbekannt sind.

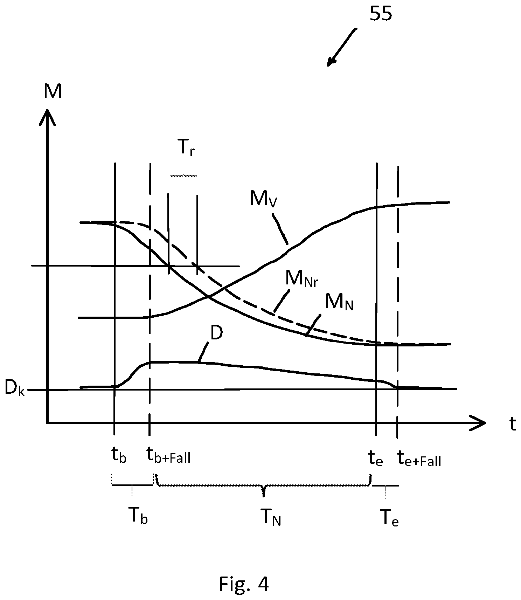

Zudem wird in diesem Prospekt auf Seite 4 in Figur 4 "Refill Frequency" vorgeschlagen, die Nachfüllfrequenz bis auf 60 Nachfüllungen pro Stunde zu steigern. Damit wird erreicht, dass die einzelne Nachfüllzeit sinkt, d.h. der Dosierfehler während dem Betrieb mit dem volumetrischen Steuermodell weniger gross werden kann. Zwar ist davon auszugehen, dass die gesamte Nachfüllzeit pro Stunde unabhängig von der Nachfüllfrequenz konstant bleibt. Jedoch ist es so, dass bei länger dauernder Nachfüllung die Abweichung Soll - Ist immer grösser wird, d.h. der Dosierfehler immer schwerwiegender. Für die meisten Anwendungen sind nun häufigere, aber kleine Dosierfehler tolerierbar, da diese in der Spezifikation bleiben, während seltenere, aber grosse Dosierfehler aus der Spezifikation hinausführen und damit nicht akzeptabel sind. Das volumetrische, die Verdichtung auf Grund von Daten aus der vorangegangenen Leerung des Vorratsbehälters berücksichtigende Steuermodell in Verbindung mit einer hohen Nachfüllfrequenz ermöglicht für gewisse Anwendungen eine vergleichsweise gute Dosierung während der Nachfüllung. Allerdings ist dem die Verdichtung berücksichtigenden volumetrischen Reglermodell nachteilig, dass während der Nachfüllung immer noch erhebliche Dosierfehler auftreten, d.h. Dosierfehler, die grösser sind als diejenigen, die während der gravimetrischen Dosierung auftreten. Besonders nachteilig ist dabei, dass der Dosierfehler selbst nach wie vor nicht bekannt ist, auch wenn er durch ein volumetrisches Steuermodell mit erhöhter Nachfüllfrequenz der Grösse nach reduziert werden kann. Durch die blosse Existenz eines unbekannten Dosierfehlers kann sich, beispielsweise in der Pharmazie oder auch bei Farbmischungen (s. oben) ein Qualitätsproblem ergeben, auch wenn ein Dosierfehler an sich zulässig sein sollte.

In der WO 2013/182869 wird auf Seite 7 vorgeschlagen, während der Nachfüllung Daten zu speichern, für die Nachfüllung jeweils dieselbe Pulvermenge in den Vorratsbehälter zu geben und den Ausgabe-Förderer nach den Daten zu betreiben, die bei einer vorgehenden Nachfüllung gespeichert worden sind. Dabei sei es dank der gleichen Nachfüllbedingungen möglich, Daten am Auslass des Dosierers zu sammeln und die Geschwindigkeit des Ausgabe-Förderer entsprechend zu regeln. Es wird jedoch weder vorgeschlagen, was für Daten das sein könnten, noch wie am Auslass des Dosierers Daten überhaupt erfasst werden können. U.A. das Prinzip der gravimetrischen Dosierung überwindet gerade das Problem, dass der Durchsatz in kg/h bei einem ausgegebenen Schüttgutstrom nur mit erheblichem Aufwand zu messen ist - zudem würde dies bedeuten, dass hinter dem Dosierer eine zusätzliche Messstation vorgesehen werden muss. Ferner verbleibt unklar, wie ein Reglermodell für die nächste Nachfüllung aufgebaut sein müsste, falls tatsächlich Daten am Auslass des Dosierers erhoben werden könnten.

Entsprechend ist es die Aufgabe der vorliegenden Erfindung, einen Dosierer für Schüttgüter bereit zu stellen, der eine Bestimmung des Dosierfehlers während der Nachfüllung erlaubt. Diese Aufgabe wird durch ein Verfahren mit den Merkmalen von Anspruch 1 oder durch einen Dosierer mit den Merkmalen von Anspruch 14 gelöst.

Dadurch, dass das während der Nachfüllung in den Vorratsbehälter ausgegebene Schüttgutgewicht in der Nachfüllstation erfasst wird, kann dieses unabhängig von den während der Nachfüllung im Dosierer auftretenden Störungen bestimmt werden. Dadurch, dass die während der Nachfüllung im Vorratsbehälter erfolgte Zunahme des Schüttgutgewichts bestimmt wird, lässt sich aus der Differenz zum nachgefüllten Schüttgutgewicht der Ist-Massenstrom des über den Ausgabe-Förderer abgeflossenen Schüttgutgewichts bestimmen. Da dabei die Messung nur der Zunahme des Schüttgutgewichts im Vorratsbehälter erfolgen muss, können die bei der Nachfüllung erfolgenden, erheblichen Störungen dieser Messung wie unten beschrieben geeignet kompensiert werden.

Bei einer weiteren Ausführungsform der vorliegenden Erfindung nach den Ansprüchen 2 und 15 wird über die gestellte Aufgabe hinaus ein Dosierer für Schüttgüter bereitgestellt, der weiter eine eine Regelung des ausgegebenen Ist-Massenstroms während der Nachfüllung des Vorratsbehälters erlaubt. Dadurch steht ein Dosierer mit einer Regelung der ausgegebenen Schüttgutmenge auch während der Nachfüllphase zur Verfügung, wobei wahlweise neben der Regelung auch der (wegen der Regelung minimierte) Dosierfehler ausgegeben werden kann.

Weitere bevorzugte Ausführungsformen weisen die Merkmale der abhängigen Ansprüche auf.

Die Erfindung wird nachstehend anhand der Figuren noch etwas näher beschrieben.

Es zeigt:
- Figur 1: schematisch einen erfindungsgemässen Dosierer,
- Figur 2a: ein Ablaufdiagramm zur Bestimmung des Dosierfehlers des während der Nachfüllung aus dem Dosierer von Figur 1 abgegebenen Massenstroms
- Figur 2b: ein Ablaufdiagramm zur Regelung des während der Nachfüllung aus dem Dosierer von Figur 1 abgegebenen Massenstroms
- Figur 3: ein Ablaufdiagramm zur Berechnung eines bereinigten Gewichts des Schüttguts im Vorratsbehälter des Dosierers von Figur 1,
- Figur 4: ein Diagramm zur Bestimmung der Verzögerung der Gewichtszunahme im Vorratsbehälter des Dosierers von Figur 1, und
- Figur 5: ein Ablaufdiagramm zu einer weiteren Ausführungsform der Regelung des während der Nachfüllung aus dem Dosierer von Figur 1 abgegebenen Massenstroms.

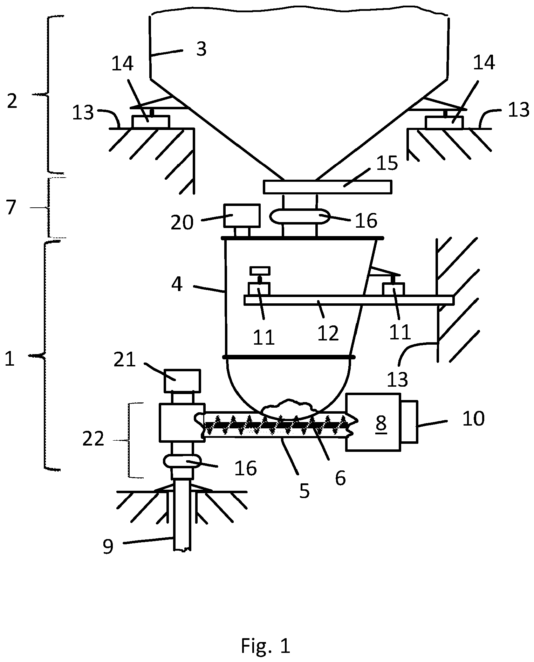

Figur 1 zeigt schematisch einen erfindungsgemässen Dosierer 1 mit einer Nachfüllstation 2 mit einem Nachfüllbehälter 3 für das zu fördernde und zu dosierende Schüttgut. Der Dosierer 1 weist einen Vorratsbehälter 4 für das Schüttgut auf, sowie einen hier als Schneckenförderer 5 ausgebildeten Ausgabe-Förderer für das Schüttgut. Dieser ist aufgeschnitten dargestellt, so dass eine Förderschnecke 6 ersichtlich ist. An dieser Stelle sei erwähnt, dass auch andere Ausgabe-Förderer erfindungsgemäss sind, etwa Scheiben- oder Vibrationsförderer.

Über einen Verbindungskanal 7 zwischen dem Nachfüllbehälter 3 und dem Vorratsbehälter 4 kann in diesen Schüttgut nachgefüllt werden, das wiederum von der durch einen Motor 8 angetriebenen Förderschnecke 6 über eine Ableitung 9 als gleichmässig dosierter Massenstrom abgegeben wird. Dazu wird der Motor 8 über eine Steuerung 10 geregelt. Diese muss nicht notwendigerweise am Dosierer 1 angeordnet sein, sondern kann sich irgendwo in der Produktionslinie, z.B. bei der Liniensteuerung befinden. Zur Entlastung der Figur sind die für den Betrieb der Steuerung notwendigen Datenleitungen zwischen ihr und den betroffenen Komponenten des Dosierers 1 und der Nachfüllstation 2 weggelassen.

Der Dosierer 1 ruht auf mehreren gravimetrischen (d.h. der gravimetrischen Dosierung dienenden) Waagen 11(es kann aber auch nur eine gravimetrische Waage vorgesehen werden), die ihrerseits über einen Stützbalken 12 an einem Gestell 13 der Produktionslinie angeordnet sind. Ebenso ruht bei der hier gezeigten Ausführungsform der Nachfüllbehälter 3 erfindungsgemäss auf Nachfüll-Waagen 14, die auf dem Gestell 13 angeordnet sind. Der Verbindungskanal 7 weist bei der dargestellten Ausführungsform einen Schieber 15 auf, der für die Nachfüllung des Vorratsbehälters 4 geöffnet werden kann und während dessen Leerung geschlossen bleibt. Andere Schliessorgane, wie beispielsweise eine Zellradschleuse, können ebenfalls vorgesehen werden. Weiter ist ein Balg 16 vorgesehen, der den Vorratsbehälter 4 (und damit den Dosierer 1) von der Nachfüllstation 2 mechanisch entkoppelt, so dass die gravimetrischen Waagen 11 nur das Gewicht des Dosierers 1 detektieren. Solch ein Balg 16 ist auch vor der Leitung 9 vorgesehen, welche den gleichmässig dosierten Massenstrom des Schüttguts weiterbefördert.

Die oben beschriebene Struktur dieser Anordnung ist dem Fachmann grundsätzlich bekannt, ebenso die zwei gefahrenen Betriebsmodi: Einmal der gravimetrische Betriebsmodus, in welchem der Vorratsbehälter geleert und der Gewichtsverlust des Dosierers 1 dem Ist-Massenstrom des Schüttguts entspricht (da das Gewicht des Dosierers 1 selbst konstant ist), wobei ein gravimetrisches Regelmodell in der Steuerung 10 die Förderleistung der Förderschnecke 6 im Hinblick auf den Soll-Massenstrom regelt. Dann der volumetrische Betriebsmodus, in welchem der Vorratsbehälter bei blinder gravimetrischer Regelung nachgefüllt wird. An Stelle der Regelung tritt dann ein volumetrisches Steuermodell, das bevorzugt wie oben beschrieben auf den Daten zur Regelung während dem gravimetrischen Betrieb aufsetzt, wobei jedoch, wie erwähnt, während der Nachfüllung der nicht regelbare Ist-Massenstrom grössere Abweichungen zum Soll-Massenstrom aufweist, als dies im gravimetrischen Modus der Fall ist.

Weiter zeigt Figur 1 einen Drucksensor 20 für den im Vorratsbehälter 4 herrschenden Innendruck. Während der mehr oder weniger schlagartig erfolgenden Nachfüllung des Vorratsbehälters erhöht sich in diesem der Luftdruck entsprechend. Wird nach der Nachfüllung der gravimetrische Betrieb wieder aufgenommen, besteht bei einem geschlossenen System, in welchem der Vorratsbehälter 4 gegenüber der Umgebung nicht offen ist, noch kurze Zeit ein erhöhter Druck fort. Dies ist häufig auch dann der Fall, wenn ein Überdruckkanal zwischen dem Vorratsbehälter 4 und dem Nachfüllbehälter 3 vorgesehen wird, da dieser (oder die ihm stromaufwärts vorangehenden Leitungen) oft nicht die Funktion eines Expansionsgefässes übernehmen können. Das bedeutet, dass beim Wechsel vom volumetrischen in den gravimetrischen Modus das von den gravimetrischen Waagen 11 registrierte Gewicht noch höher ist als es dem sich im Vorratsbehälter 4 befindenden Schüttgut entspricht. Grund dafür ist, dass der Schieber 15 der Nachfüllstation 2 (notwendigerweise) über den Nachfüllbehälter 3 am Gestell 13 aufgehängt ist, so dass das Produkt aus der Querschnittsfläche des Verbindungskanals 7 mal den aktuell herrschenden Überdruck eine zusätzliche, verfälschende Kraft auf die gravimetrischen Waagen 11 ergibt. Dem Fachmann ist es bekannt, am Anfang des gravimetrischen Modus einen erhöhten Luftdruck im Vorratsbehälter 3 über den Drucksensor 20 zu erkennen und insofern eine falsche gravimetrische Dosierung zu vermeiden.

Weiter ersichtlich ist ein Drucksensor 21 an der Ausgabeleitung 22, über welchen in dieser herrschende Druckschwankungen erfasst und analog zu den Druckschwankungen im Vorratsbehälter 4 von der Steuerung 10 verarbeitet werden können.

Die Anmelderin hat gefunden, dass während der Nachfüllung zusätzlich zu den Druckschwankungen im Vorratsbehälter 4 weitere Störungen hinzukommen, die den während der Nachfüllung ausgegebenen Massenstrom unerwünscht beeinflussen:
Dazu gehört beispielsweise der Impuls des von der Höhe des Nachfüllbehälters 3 auf den Boden des Vorratsbehälters 4 herunterfallenden Schüttguts, wobei diese Störung verschieden ausgeprägt sein kann. Erstens erzeugt der Impuls eine Kraft auf den Vorratsbehälter 4, die von den gravimetrischen Waagen als Gewicht erkannt werden (Gewicht durch Impuls), so dass die Steuerung 10 eine unzutreffende Schüttgutmasse im Vorratsbehälter 4 erkennt. Zweitens wird durch den Impuls das unter dem nachstürzenden Schüttgut liegende Schüttgut zusätzlich verdichtet, d.h. über die dem Füllstand entsprechende Verdichtung hinaus (Verdichtung durch Impuls). Drittens kann das Schüttgut durch den Impuls durch die drehende Schnecke in Förderrichtung (oder durch einen anders aufgebauten Ausgabe-Förderer) zusätzlich hindurch getrieben werden (Zusatzförderung durch Impuls). Umgekehrt kann es sich ergeben, dass das Schüttgut während des Falls in den Vorratsbehälter 4 verwirbelt, sich dadurch der Impuls ändert und im Vorratsbehälter 4 eine Fluidisierung des Schüttguts auftritt (verringerte Förderung durch Fluidisierung). Schliesslich kann noch während der Nachfüllung eine kurzfristigen Brückenbildung des Schüttguts auftreten, sowohl im Vorratsbehälter 4 oder im Nachfüllbehälter 3, so dass die Nachfüllmenge beeinflusst wird, zuerst beim Aufbau der Brücken, dann bei deren Einsturz (veränderte Förderung durch fehlerhaften Materialfluss).

Je nach Material treten alle diese Störungen während einer Phase der Nachfüllung oder während der ganzen Nachfüllung auf, gleich stark oder unterschiedlich stark, einzeln oder kombiniert, kumulieren sich dann oder gleichen sich wechselnd wieder teilweise aus. Die Umgebungsbedingungen können diese Störungen beeinflussen, etwa durch die Temperatur, den Luftdruck oder die Luftfeuchtigkeit, so dass beispielsweise je nach der Tageszeit dadurch ein zusätzlicher Drift des während der Nachfüllung dosierten Massenstroms an Schüttgut entsteht.

Figur 1 zeigt nun erfindungsgemäss bei der dargestellten Ausführungsform als Waagen 14 ausgebildete Sensoren für einen Parameter zur ausgegebenen Nachfüllmasse der Nachfüllstation 2. Der Nachfüllbehälter 3 ruht auf den Nachfüll-Waagen 14. Durch diese lässt sich nicht nur das für eine Nachfüllung in den Vorratsbehälter 4 ausgegebene Gesamtgewicht des Schüttguts bestimmen, sondern auch der Massenstrom des Schüttguts während der Nachfüllung selbst.

Die Anmelderin hat gefunden, dass im Vorratsbehälter 4 auftretende Störungen während der Nachfüllung erfasst und in der Steuerung rechnerisch eliminiert oder wenigstens relevant reduziert werden können, wenn während der Nachfüllung nicht das in den Vorratsbehälter 4 eingefüllte Schüttgutgewicht, sondern das aus dem Nachfüllbehälter 3 ausgegebene Schüttgutgewicht erfasst wird, s. dazu die Beschreibung unten.

Es ergibt sich ein erfindungsgemässer gravimetrischer Dosierer mit einem Vorratsbehälter für das zu dosierende Schüttgut und einer mit diesem verbundenen Nachfüllstation, die ausgebildet ist, eine Nachfüllmenge von Schüttgut in den Vorratsbehälter nachzufüllen und mit einem Sensor für einen Parameter zur Nachfüllmenge versehen ist, mit mindestens einer Waage, die betriebsfähig mit dem Vorratsbehälter und einem Ausgabe-Förderer für das Schüttgut zur gravimetrischen Dosierung des Schüttguts verbunden ist, und mit einer Steuerung für den Ausgabe-Förderer, die ausgebildet ist, diesen während einer Nachfüllphase gemäss einem volumetrischen Steuermodell anzusteuern, wobei die Steuerung weiter ausgebildet ist, während der Nachfüllung aus den Signalen des Sensors zur Nachfüllmenge das von der Nachfüllstation ausgegebene Schüttgutgewicht, und aus dem Gewichtssignal der mindestens einen gravimetrischen Waage einen Wert für das Gewicht des im Vorratsbehälter aktuell vorhandenen Schüttguts und daraus einen Ist-Schüttgutstrom zu bestimmen.

Bei einer weiteren erfindungsgemässen Ausführungsform ist die Steuerung weiter ausgebildet, aus der Differenz zwischen einem Soll - Schüttgutstrom und dem Ist-Schüttgutstrom einen Korrekturfaktor für das volumetrische Steuermodell zu bestimmen und auf dieses anzuwenden.

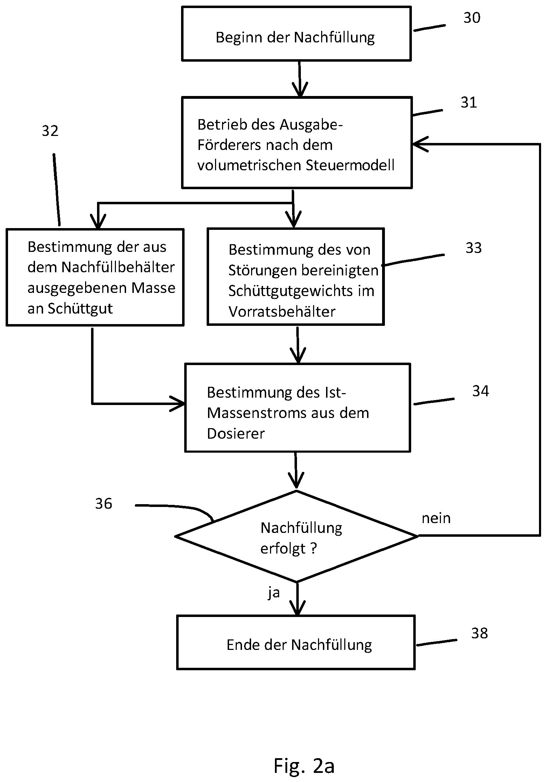

Figur 2a zeigt ein Ablaufdiagramm zur erfindungsgemässen Bestimmung des Dosierfehlers des vom Dosierer 1 (Figur 1) ausgegebenen Massenstroms während der Nachfüllung seines Vorratsbehälters 4.

Im Schritt 30 wird durch die Steuerung 10 die Nachfüllung ausgelöst, beispielsweise wenn das Gewichtssignal der Waagen 11 einem unteren Füllstand des Vorratsbehälters 4 entspricht. Dadurch schaltet die Steuerung 10 im Schritt 31 um auf das in ihr hinterlegte, oben beschriebene volumetrische Steuermodell und öffnet das hier als Schieber 15 ausgebildete Ventil im Nachfüllkanal 7, so dass ein Nachfüll-Massenstrom von Schüttgut in den Nachfüllbehälter fliesst. Die Nachfüll-Waagen 14 registrieren entsprechend einer Verminderung des Gewichts des Nachfüllbehälters 3, woraus die Steuerung 10 im Schritt 32 die in den Vorratsbehälter 4 nachgefüllte Schüttgutmasse bestimmt.

Erfindungsgemäss verarbeitet nun die Steuerung 10 die Gewichtssignale der gravimetrischen Waagen 11 weiter, wobei diese aber auf Grund der während der Nachfüllung auftretenden Störungen stark verfälscht sind, d.h. nicht mehr dem im Vorratsbehälter 4 vorhandenen Schüttgut entsprechen. Entsprechend muss im Schritt 33 die von Störungen bereinigte Masse von Schüttgut im Vorratsbehälter 4 bestimmt werden (s. dazu auch die Beschreibung zu Figur 3).

Ist zu einem Zeitpunkt das (wahre oder angenähert wahre) Gewicht des im Vorratsbehäter 4 vorhandenen Schüttguts und das Gewicht des nachgefüllten Schüttguts (durch die Waagen 11 und 14) bekannt, entspricht die Differenz zwischen diesen Gewichten (verglichen mit diesen Gewichten zu einem früheren Zeitpunkt) dem über den Ausgabe-Förderer ausgegebenen Schüttgutgewicht. Die Ableitung nach der Zeit ergibt im Schritt 34 den Nachfüll-Massenstrom, die Veränderung der Masse des Schüttguts im Vorratsbehälter 4 und der vom Dosierer 1 ausgegebene Ist-Schüttgutmassenstrom.

Die Daten zum Ist-Schüttgutstrom können in einem Datenspeicher der Steuerung abgelegt oder in Echtzeit an die Liniensteuerung oder an eine andere Instanz ausgegeben werden, in welcher die Daten zur laufenden Dosierung weiter verarbeitet werden. Mit diesen Daten ergibt sich eine lückenlose Nachverfolgbarkeit der Dosierung ohne einen "blinden Fleck" während der Nachfüllung, was, wie oben beschrieben, insbesondere bei hochsensibler Produktion (Beispiel Pharmazie oder auch andere Anwendungen) wesentlich sein kann.

Es sei an dieser Stelle angemerkt, dass das volumetrische Steuermodell im einfachen Fall einen blossen vorbestimmten Wert für den Soll-Massenstrom enthält, und damit eine einfache, konstante Stellgrösse für den Motor 8 (bzw. für den Antrieb eines anders ausgebildeten Ausgabe-Förderers) so dass es den vom Ausgabe-Förderer erzeugten Massenstrom über einen vorbestimmten Wert für einen Soll-Massenstrom steuert. Es kann aber auch beispielsweise eine vorbestimmt über die Nachfüllperiode veränderte, beispielsweise während einer vorgehenden gravimetrischen Leerung (oder nach einem anderen, geeigneten Prinzip) bestimmte Stellgrösse enthalten, wie dies oben beschrieben ist. Dann steuert es den vom Ausgabe-Förderer erzeugten Massenstrom zusätzlich durch Daten zur Verdichtung des Schüttguts während der Leerung des Vorratsbehälters.

Im Schritt 36 überprüft die Steuerung 10 beispielsweise anhand der nachgefüllten Masse von Schüttgut (Waagen 14) oder anhand des von Störungen bereinigten Schüttgutgewichts (Waagen 11), ob der Vorratsbehälter die Nachfüll-Sollmenge von Schüttgut enthält und bricht im positiven Fall im Schritt 37 die Nachfüllung ab, d.h. schaltet in den gravimetrischen Modus um oder geht im negativen Fall zurück zum Schritt 31 für die Fortsetzung der Nachfüllung.

Im Ergebnis liegt erfindungsgemäss eine (gravimetrische) Bestimmung des während der Nachfüllung vom Dosierer 1 ausgegebenen Massenstroms vor, wobei der Dosierer einen Vorratsbehälter und eine mit diesem verbundene Nachfüllstation aufweist, für gravimetrische Dosierung über einen Ausgabe-Förderer ausgebildet ist, der Nachfüllbehälter den Vorratsbehälter periodisch von einem unteren Füllstand bis zu einem gefüllten Zustand mit Schüttgut nachfüllt und mit einem Sensor für einen Parameter zur ausgegebenen Nachfüllmenge versehen ist, während der Nachfüllung der Ausgabe-Förderer durch ein volumetrisches Steuermodell angesteuert wird, und wobei das während der Nachfüllung des Vorratsbehälters in diesen nachgefüllte Schüttgutgewicht aus den Daten des Sensors für die aus der Nachfüllstation ausgegebene Nachfüllmenge und die während der Nachfüllung des Vorratsbehälters erfolgte Zunahme des Schüttgutgewichts im Vorratsbehälter bestimmt wird und aus der Differenz dieser Gewichte der während der Nachfüllung ausgegebene Ist-Schüttgutstrom berechnet wird.

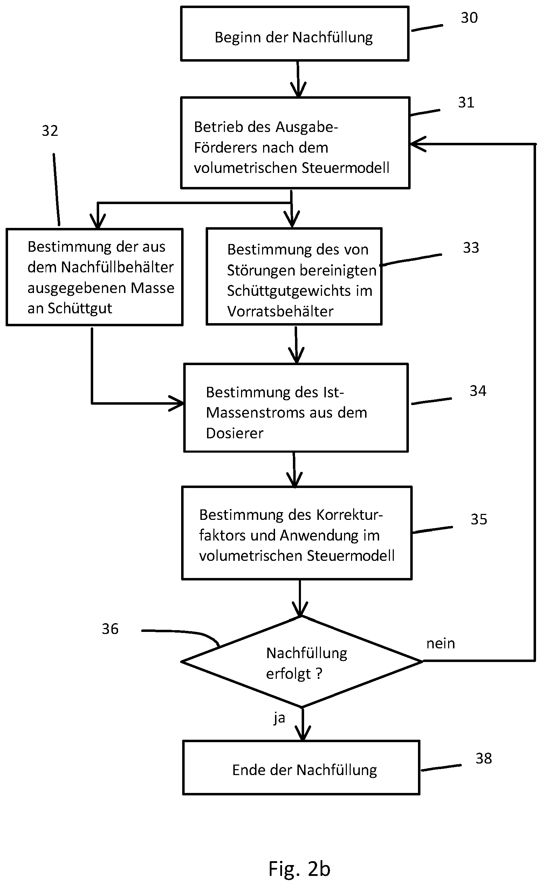

Figur 2b zeigt ein Ablaufdiagramm zu einer weiteren Ausführungsform der Erfindung, nämlich zur Regelung des während der Nachfüllung aus dem Dosierer von Figur 1 abgegebenen Massenstroms, die auf der Bestimmung des Ist-Schüttgutstroms gemäss dem Ablauf von Figur 2a aufsetzt.

Anhand des Ist-Massenstroms nach Schritt 34 (s. dazu auch Figur 2a) generiert nun die Steuerung 10 in Schritt 35 zusätzlich einen aktuellen Korrekturfaktor für das volumetrische Steuermodell und damit für die Stellgrösse so, dass der Ist-Massenstrom an den Soll-Massenstrom wenigstens angenähert wird oder im Wesentlichen diesem entspricht.

Es ergibt sich damit bevorzugt, dass weiter zur Regelung des Massenstroms aus der Differenz zwischen einem Soll - Schüttgutstrom und dem Ist-Schüttgutstrom ein Korrekturfaktor für das volumetrische Steuermodell generiert und auf dieses angewendet wird. Besonders vorteilhaft ist dabei, dass natürlich die Daten zum Ist-Schüttgutstrom bzw. Ist-Massenstrom weiterhin zur Nachverfolgbarkeit der Dosierung während der Nachfüllung zur Verfügung stehen, zugleich aber der (nun quantitativ erfassbare und nachverfolgbare) Dosierfehler selbst schon während der Nachfüllung minimiert wird.

Bevorzugt wird der Ablauf gemäss den Figuren 2a oder 2b während der Nachfüllung wenigstens einmal, bevorzugt mehrfach durchlaufen, so dass der Ist-Schüttgutstrom mehrfach bestimmt und/oder der Korrekturfaktor mehrfach generiert und dann in Echtzeit auf das volumetrische Steuermodell angewendet werden kann. Der Fachmann kann für den konkreten Fall die Taktzeit dieses Durchlaufs und damit die Feinheit der Regelung während der Nachfüllung bestimmen, die unter anderem auch auf die Eigenschaften des zu dosierenden Materials abgestimmt werden kann. Es ergibt sich, dass bevorzugt der gravimetrischer Dosierer ausgebildet ist, den Ist-Schüttgutstrom (Ablauf gemäss Figur 2a) und/oder den Korrekturfaktor (Ablauf nach Figur 2b) während der Nachfüllung mehrfach zu bestimmen, dabei einen jeweils bestimmten Korrekturfaktor und in Echtzeit auf das volumetrische Steuermodell anzuwenden, derart, dass dessen Wert für den Soll-Schüttgutstrom während der Nachfüllung angepasst wird. Es versteht sich, dass, wie oben erwähnt, auch im Fall eines während der Nachfüllung geregelten Schüttgutstroms zugleich der Dosierfehler quantitativ erfasst und ausgegeben werden kann.

Figur 3 zeigt ein Ablaufdiagramm zur Bestimmung eines von Störungen bereinigten Schüttgutgewichts im Vorratsbehälter, d.h. zum Schritt 33 von Figur 2. Damit eröffnet sich weiter der Weg, die Auswirkungen der oben beschriebenen Störungen auf den vom Dosierer ausgegebenen Massenstrom über einen eine Stellgrösse darstellenden Korrekturfaktor für das volumetrische Steuerungsmodell wenigstens zu vermindern oder im Wesentlichen zu beseitigen.

Es ergibt sich, dass das während der Nachfüllung die Zunahme des Schüttgutgewichts im Vorratsbehälter über ein von Störungen bereinigtes Schüttgutgewicht berechnet wird.

In der Figur 3 dargestellt sind drei Zweige 40 bis 42, in welchen die Steuerung 10 des Dosierers 1 (Figur 1) jeweils unabhängig von den anderen Zweigen 40 bis 42 eine Bereinigung des von den gravimetrischen Waagen 11 (Figur 1) detektierten, jedoch durch eine spezifische Störung verfälschten Gewichts des im Vorratsbehälter 4 vorhandenen Schüttguts vornimmt.

Jeder Zweig 40 bis 42 beginnt mit dem Schritt 30, sobald die Steuerung 10 die Nachfüllung startet, und endet mit dem Schritt 38, d.h. sobald der Vorratsbehälter 4 aufgefüllt ist. In jedem Zweig wird gemäss Schritt 43 das Gewichtssignal der gravimetrischen Waagen 11 während der Nachfüllung von der Steuerung 10 erfasst und zur Bestimmung des bereinigten Gewichts verwendet.

Im Zweig 40 wird im Schritt 45 die durch den Impuls des nachgefüllten Schüttguts auf den Vorratsgehälter wirkende, von den gravimetrischen Waagen 11 als Gewicht erkannte Kraft bestimmt. In der Steuerung 10 kann dazu die Geometrie des Nachfüllkanals 7 und des Vorratsbehälters 4, damit die Fallhöhe des Schüttguts hinterlegt werden. Aus den Signalen der Nachfüll-Waagen 14 kann die Steuerung 10 das sich verringernde Gewicht des Nachfüllbehälters 3 und daraus den Massenstrom des in den Vorratsbehälter 4 fallenden Schüttguts bestimmen. Aus der Fallhöhe und dem Massenstrom folgt der Impuls (bzw. Impulsstrom) und daraus wiederum die über die Zeit durch den Impuls auf die gravimetrischen Waagen 11 wirkende Kraft, welche den gesuchten Anteil am von den gravimetrischen Waagen 11 detektierten Gewichts erzeugt. Im Schritt 46 wird diese Kraft vom detektierten Gewicht abgezogen und als ein in Bezug auf den Impuls bereinigtes Gewicht in der Steuerung abgelegt. Es ergibt sich, dass bevorzugt das während der Nachfüllung das bereinigte Schüttgutgewicht durch die über den Impuls des herabstürzenden Schüttguts auf den Vorratsbehälter ausgeübte Kraft berechnet wird und dass bevorzugt die Steuerung des gravimetrischen Dosierers ausgebildet ist, ein um den Impuls des in den Vorratsbehälter herabfallenden Schüttguts bereinigtes Schüttgutgewicht im Vorratsbehälter zu bestimmen. Es sei angemerkt, dass die Signale der Nachfüll-Waagen 14 ein leichtes Pulsieren anzeigen können, das beispielsweise durch einen Nachfüll-Schneckenförderer erzeugt wird. Durch den freien Fall des nachgefüllten Pulvers glättet sich diese Pulsation. In der Steuerung 10 kann dann in Echtzeit eine entsprechende (eventuell durch Versuche ermittelte) Glättung angenommen werden, so dass die tatsächlich dem Vorratsbehälter zugeführte Schüttgutmenge hoch präzise erfasst ist.

Im Zweig 41 wird im Schritt 47 der aktuelle Überdruck im Vorratsbehälter 4 erfasst, woraus die Steuerung 10 durch die in ihr hinterlegte Geometrie des Vorratsbehälters 4 und des Nachfüllkanals 7 die Kraft bestimmt, mit welcher durch den Überdruck die Waagen 11 belastet werden. Im Schritt 48 wird diese Kraft vom detektierten Gewicht abgezogen und als ein in Bezug auf den Überdruck bereinigtes Gewicht in der Steuerung abgelegt. Bevorzugt geschieht dies ebenso im Hinblick auf den Überdruck in der Ausgabeleitung. Es ergibt sich, dass das bereinigte Schüttgutgewicht mit Hilfe eines im Vorratsbehälter herrschenden aktuellen Drucks berechnet wird.

Bevorzugt ergibt sich ein gravimetrischer Dosierer, bei welchem der Vorratsbehälter und/oder eine nach dem Ausgabe-Förderer angeordnete Ausgabeleitung für Schüttgut mit einem Drucksensor versehen ist, der ausgebildet ist, während der Nachfüllung des Vorratsbehälters ein Signal für eine Druckschwankung zu generieren, und wobei die Steuerung weiter ausgebildet ist, aus dem Signal für die Druckschwankung und dem Signal der Waage einen um die Druckschwankung bereinigten Wert für das Gewicht des im Vorratsbehälter aktuell vorhandenen Schüttguts zu bestimmen.

Im Zweig 42 wird im Schritt das dynamische Verhalten der gravimetrischen Waagen 11 im Hinblick auf das von ihnen detektierte Gewicht erfasst. Dadurch, dass der Impuls durch das nachgefüllte Material über die Federsteifigkeit der Waagen 11 (es kann sich um eine einzige oder mehrere gravimetrische Waagen handeln, je nach dem Aufbau des Dosierers 1), der Dämpfung des wägenden Systems und der gesamten gewogenen Masse (gewogener Teil der Waage, des Dosierers, des Schüttguts und der durch den Impuls auf die Waage erzeugten Kraft) in Schwingung versetzt wird, entsteht eine virtuelle Kraft aus dem dynamischen Verhalten der oszillierenden Waage, welche eine weitere Störung darstellt, die das detektierte Gewicht des Schüttguts im Vorratsbehälter 4 verfälscht.

Die durch den Impuls erzeugte Kraft kann gemäss Schritt 45 im Zweig 40 berechnet werden.

Die Masse des wägenden Teils der Waagen 11, die Dämpfung des wägenden Systems sowie dessen Federsteifigkeit sind Parameter, die der Fachmann im konkreten Fall ermitteln kann, weil entweder die Waagen 11 bekannt sind, weil über eine Kalibrierfunktion diese Parameter bestimmt werden können oder weil einfach anhand einer Nachfüllung das Verhalten der Waage durch Versuche bestimmbar ist. Über diese Parameter kann der Fachmann das Oszillieren und die daraus entstehende virtuelle Kraft der Waagen 11 während der Nachfüllung berechnen und in der Steuerung 10 ablegen. Das aktuelle Gewichtssignal wird nun im Hinblick auf die virtuelle Kraft bereinigt und als um das dynamische Verhalten der Waage bereinigtes Gewicht in der Steuerung 10 abgelegt, nach Schritt 50. Es ergibt sich, dass das bereinigte Schüttgutgewicht über die Schwingungseigenschaften der wenigstens einen gravimetrischen Waage berechnet wird, wobei weiter bevorzugt die Steuerung eines gravimetrischen Dosierers ausgebildet ist, ein um eine virtuelle Kraft aus dem dynamischen Verhalten der durch den Impuls des in den Vorratsbehälter herabfallenden Schüttguts oszillierenden mindestens einen gravimetrischen Waage bereinigtes Schüttgutgewicht im Vorratsbehälter zu bestimmen.

Es sei hier angemerkt, dass der Einfluss des dynamischen Verhaltens der Waage vor allem von ihrer Federsteifigkeit abhängt -je nach den Eigenschaften des nachgefüllten Materials und der Resonanzfrequenz der gravimetrischen Waagen kann der Fachmann im konkreten Fall von einer Bestimmung des um das dynamische Verhalten bereinigten Gewichts absehen, so etwa bei sehr steifen Waagen mit hoher Resonanzfrequenz und einem bei der Nachfüllung verwirbelnden Material, das einen weichen Impuls erzeugt.

An dieser Stelle sei weiter erwähnt, dass natürlich die Störungen gemäss der Zweige 40 und 41 bzw. die Störungen gemäss allen Zweigen 40 bis 42 parallel erfasst und direkt ein bereinigtes Gewicht des Schüttguts im Vorratsbehälter aus den Resultaten der Schritte 45,47 und gegebenenfalls 49 berechnet werden kann.

Figur 4 zeigt ein Diagramm 55 zu der Verteilung des Schüttguts zwischen dem Nachfüllbehälter 3 und dem Vorratsbehälter 4 während der Nachfüllung. Auf der horizontalen Achse ist die Zeit abgetragen, wobei t_{B} den Beginn und tₑ das Ende der Nachfüllung markiert. Auf der horizontalen Achse ist die Masse M von Schüttgut aufgetragen.

Die Kurve M_{N} bezeichnet die Masse von Schüttgut im Nachfüllbehälter 3, sie entspricht dem von den Nachfüllwaagen 14 detektierten Gewicht. Die Kurve Mv bezeichnet die Masse von Schüttgut im Vorratsbehälter 4, sie entspricht dessen wahrem Gewicht.

Wird die Nachfüllung zur Zeit t_{b} ausgelöst, verringert sich die Masse im Nachfüllbehälter sofort, da das Schüttgut durch den Verbindungskanal 7 fällt. Während der Fallzeit des Schüttguts ändert die Masse im Vorratsbehälter jedoch nicht, diese steigt erst zur Zeit t_{b+Fall} an, nämlich wenn das fallende Schüttgut den unteren Füllstand des Vorratsbehälters erreicht hat. Damit steigt die Masse im Vorratsbehälter nach dem Ende der Nachfüllung zur Zeit tₑ noch kurzzeitig etwas an, nämlich bis zur Zeit t_{e+Fall}. Dabei ist das zweite Zeitintervall Tₑ = tₑ - t_{e+Fall} kleiner als das erste Zeitintervall T_{b} = t_{b} - t_{b+Fall}, da die Fallhöhe beim oberen Füllstand nach der Nachfüllung kleiner ist.

Die Kurve D bezeichnet die Differenz zwischen den Massen im Nachfüllbehälter 3 und im Vorratsbehälter 4, nämlich M_{N} - M_{V}. Da es sich um einen blossen Austausch von Masse zwischen diesen Behältern handelt, sollte diese Differenz grundsätzlich konstant sein und den Wert Dₖ besitzen. Der Sprung der Kurve D im ersten Zeitintervall T_{b} auf einen Wert grösser als Dₖ zeigt damit an, dass sich eine Schüttgutmasse im freien Fall befindet, ebenso im Abschnitt T_{N} und während dem Sprung im Zeitintervall Tₑ.

Im Schritt 34 von Figur 2 bestimmt die Steuerung 10 den vom Dosierer während der Nachfüllung ausgegebenen Ist-Massenstrom, indem die Differenz gebildet wird aus der vom Nachfüllbehälter 3 ausgegebenen Schüttgutgewicht und dem von Störungen bereinigten Schüttgutgewicht im Vorratsbehälter 3, welches auf dem von den gravimetrischen Waagen 11 detektierten Gewicht beruht. Gemäss dem Diagramm 55 enthält der bestimmte Ist - Massenstrom im Zeitintervall T_{b} + T_{N} + Tₑ = t_{e+Fall} - t_{b} einen systematischen Fehler F = D - Dₖ. Die Berechnung des Ist-Massenstroms ist damit um den nach der Zeit abgeleiteten Fehlermassenstrom Ḟ zu gross, was zu einem entsprechend falschen Korrekturfaktor führt. Dieser Fehler kann, je nach dem konkreten Fall, in Kauf genommen werden - bevorzugt wird der Fachmann jedoch den Algorithmus im Schritt 34 von Figur 2 so modifizieren, dass die Werte für den vom Nachfüllbehälter 3 ausgegebene Masse (die Kurve M_{N}) um eine im Zeitintervall T_{b} liegende Zeit Tᵣ nach rechts verschoben werden, s. die Kurve M_{Nr}, mit der Folge, dass der systematische Fehler F verkleinert wird oder verschwindet. Die Zeit T_{b} steht aus dem detektierten Gewicht der Nachfüllwaagen 14 und dem detektierten Gewicht der gravimetrischen Waagen 11 zur Verfügung (schneller Anstieg des Gewichts durch den Impuls) oder kann einfach aus der Fallhöhe gemäss der im konkreten Fall verwendeten Geometrie angenommen werden. Ebenso die Zeit Tₑ.

Es ergibt sich, dass das nachgefüllte Schüttgutgewicht als Abnahme des Gewichts des Nachfüllbehälters und die von der wenigstens einen gravimetrischen Waage registrierte Zunahme des Schüttgutgewichts im Vorratsbehälter für die Berechnung des Ist-Schüttgutstroms zeitgleich oder mit einer Zeitdifferenz verarbeitet werden, wobei bevorzugt die Zeitdifferenz wenigstens angenähert einer Fallzeit des Schüttguts vom Nachfüllbehälter in den Vorratsbehälter entspricht.

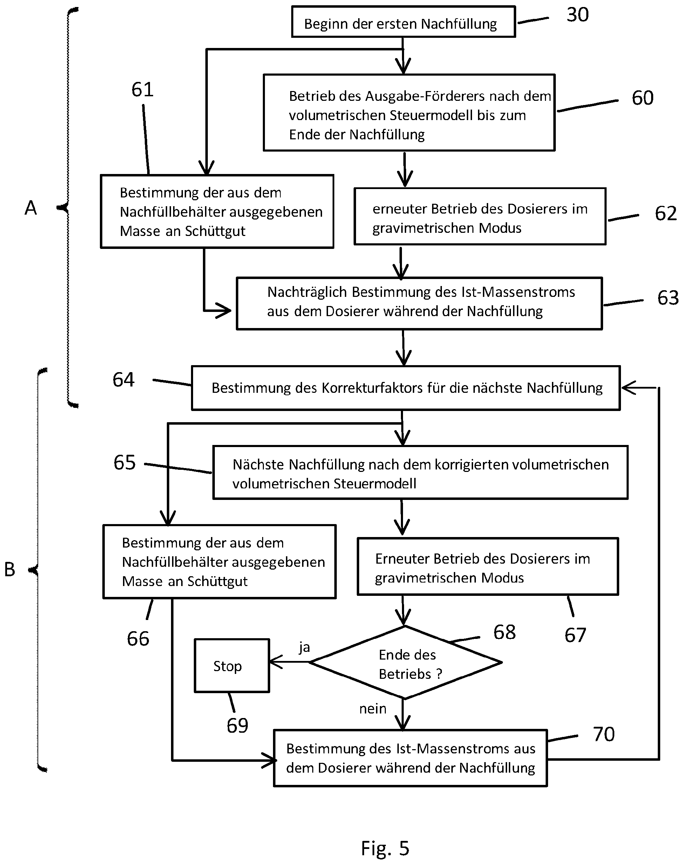

Figur 5 zeigt ein Ablaufdiagramm einer weiteren Ausführungsform der vorliegenden Erfindung. In einem ersten Abschnitt A wird der Dosierer 1 (Figur 1) während einer ersten Nachfüllung (Schritt 30) konventionell nach einem volumetrischen Steuermodell gefahren und danach ein erster Korrekturfaktor für das volumetrische Steuermodell bestimmt. Im Abschnitt B wird für Materialien, deren Nachfülleigenschaften im konkreten Fall gut reproduzieren, der Korrekturfaktor basierend auf vorangehenden Nachfüllungen weiter verbessert, bis der Durchschnitt des während der Nachfüllung ausgegebenen Ist-Massenstroms dem Soll-Massenstrom angenähert ist oder diesem im Wesentlichen entspricht.

Im Schritt 30 (Abschnitt A) beginnt die erste Nachfüllung, die gemäss Schritt 60 nur mit einem volumetrischen Steuermodell abläuft. Dennoch wird erfindungsgemäss im Schritt 61 über die Nachfüllwaagen 14 die Masse des nachgefüllten Schüttguts bestimmt und in der Steuerung 10 abgelegt. Nach der Nachfüllung schaltet die Steuerung 10 den Dosierer 1 wiederum in den gravimetrischen Modus, s. Schritt 62.

Sobald sich die Waage beruhigt hat, erfolgt die Bestimmung des während der Nachfüllung ausgegebenen, durchschnittlichen Ist-Massenstroms gemäss Schritt 63: im gravimetrischen Modus kann der nun ausgegebene gravimetrische Ist-Massenstrom zuverlässig erkannt werden, ebenso das wahre aktuelle Gewicht des Schüttguts im Vorratsbehälter 4. Aus der Differenz des nachgefüllten Schüttguts und dem wahren Gewicht zu Beginn des gravimetrischen Modus folgt die wahre Masse des während der Nachfüllung ausgegebenen Schüttguts, mit der Nachfüllzeit der durchschnittliche Nachfüll-Ist-Massenstrom während der Nachfüllung. Da die Verhältnisse während dem gravimetrischen Betriebsmodus bekannt sind (Ist-Massenstrom) kann der durchschnittliche Nachfüll-Ist-Massenstrom bis zur nächsten Nachfüllung von der Steuerung 10 berechnet werden. Damit steht wiederum erfindungsgemäss der während der Nachfüllung ausgegebene Ist-Massenstrom zur Verfügung, zwar nur als Durchschnittswert während der Nachfüllung, aber dennoch als quantitativer Wert, was im konkreten Fall bereits Bedürfnisse der Qualitätssicherung in einer Produktionslinie befriedigen kann.

Aus der Differenz zwischen dem Soll-Massenstrom und dem durchschnittlichen Nachfüll-Ist-Massenstrom berechnet die Steuerung in Schritt 64 einen Korrekturfaktor für das volumetrische Steuermodell.

Im Abschnitt B wiederholt sich der Zyklus, wobei jedoch gemäss Schritt 65 während der Nachfüllung das um den Korrekturfaktor korrigierte volumetrische Steuermodell angewendet wird. Nach dem erneuten Betrieb des Dosierers 1 im gravimetrischen Betrieb (Schritt 67) erfolgt die Abfrage, ob der Betrieb fortgesetzt werden soll (Schritt 68), wenn nein der Stopp in Schritt 69, wenn ja eine erneute Bestimmung des Nachfüll-Ist-Massenstroms in Schritt 70.

Es ergibt sich, dass der Ist-Schüttgutstrom und/oder der Korrekturfaktor nach einer Nachfüllung, aber vor der nachfolgenden Nachfüllung bestimmt und im Fall des Korrekturfaktors auf das volumetrische Steuermodell und für eine nächste Nachfüllung angewendet wird, wobei bevorzugt der Korrekturfaktor während mehreren Nachfüllungen basierend auf einem vorangehenden Korrekturfaktor neu bestimmt wird, wobei weiter bevorzugt wobei die Steuerung des gravimetrischen Dosierers ausgebildet ist, aus den Signalen des Sensors zur Nachfüllmenge einen Wert für das Gewicht des insgesamt während einer Nachfüllung nachgefüllten Schüttguts zu bestimmen und aus einem Gewichtssignal der mindestens einen gravimetrischen Waage während der auf die Nachfüllung folgenden Leerung des Vorratsbehälters einen Ist-Schüttgutstrom und/oder einen Korrekturfaktor zu bestimmen und im Fall des bestimmten Korrekturfaktors diesen diesen für eine folgende Nachfüllung auf das volumetrische Steuermodell anzuwenden.

Erfindungsgemäss können weitere Störungen wie die durch den Impuls erzeugte, zusätzliche Verdichtung bzw. eine Fluidisierung des Schüttguts im Vorratsbehälter erkannt und ausgeregelt werden. Ergibt sich eine zusätzliche Verdichtung, wird der Ist-Massenstrom zu gross, ergibt sich eine Fluidisierung, wird der Ist-Massenstrom zu klein. In beiden Fällen wird dies im Schritt 34 von Figur 2 erkannt und der Massenstrom in Echtzeit gemäss Schritt 35 entsprechend geregelt. Ebenso, im Sinn des durchschnittlich ausgegebenen Ist-Massenstroms, gemäss den Schritten 63,64 und 70 von Figur 5.

Dies gilt analog auch für Fall, dass durch den Impuls Schüttgut durch den Ausgab-Förderer hindurchgetrieben und dadurch der Ist-Massenstrom kurzfristig eine unerwünschte Spitze aufweist. Der Fachmann kann dann die Steuerung derart ausbilden, dass eine starke Spitze erkannt, der Massenstrom in Echtzeit oder im Durchschnitt entsprechend geregelt und zusätzlich die Zeit und Höhe der Spitze erfasst und in der Steuerung abgelegt wird. Das volumetrische Steuermodell kann dann neben dem Korrekturfaktor eine vorgegebene Änderung enthalten, welche zum festgestellten Zeitpunkt den Ist-Massenstrom bereits vorbestimmt herunterregelt. Störungen durch eine Brückenbildung werden erfindungsgemäss während dem Aufbau von Brücken ebenfalls erfasst und behoben, ebenso während dem Einsturz von Brücken, welcher einen Impuls ähnlich dem Impuls des nachgefüllten Materials auslöst.

In Figur 1 wird die während der Nachfüllung vom Nachfüllbehälter 3 in den Vorratsbehälter 4 ausgegebene Masse von Schüttgut über die eine oder mehrere Nachfüllwaagen 14 detektiert, wobei die Nachfüllwaagen 14 Sensoren für einen Parameter zur ausgegebenen Nachfüllmenge darstellen. An Stelle von Nachfüllwaagen 14 kann auch der Füllstand des Nachfüllbehälters 3 treten, der über Füllstandsensoren erfasst werden kann, vorausgesetzt, dass dann eine Verdichtung des Schüttguts im Nachfüllbehälter bekannt ist, beispielsweise durch Versuche. Ebenfalls kann der Fachmann an Stelle eines Schiebers 15 (Figur 1) Zellradschleusen für eine zwar schnelle, aber doch dosierte Ausgabe des Schüttguts in den Vorratsbehälter 4 vorsehen. Schliesslich ist denkbar, eine Kaskade von Dosierern vorzusehen, wobei ein Nachfülldosierer durchaus gemäss Figur 1 ausgebildet sein kann, aber dann über eine vergleichsweise grosse Förderkapazität verfügt. Dann stellt die Förderleistung der Zellradschleuse oder des Nachfülldosierers etc. einen Parameter zur ausgegebenen Nachfüllmenge dar, welcher von der Steuerung analog wie das Gewichtssignal der Nachfüllwaagen 14 verarbeitet werden kann.

## Patentansprüche

1. Verfahren zum Bestimmen des Massenstroms eines Dosierers (1) für Schüttgüter, der einen Vorratsbehälter (4) aufweist, wobei der Vorratsbehälter (4) des Dosierers (1) mit einer einen Nachfüllbehälter (3) aufweisenden Nachfüllstation (2) verbunden ist, wobei der Dosierer (1) wenigstens eine gravimetrische Waage (11) für die gravimetrische Dosierung über einen Ausgabe-Förderer des Dosierers (1) aufweist, und der Nachfüllbehälter (3) den Vorratsbehälter (4) periodisch von einem unteren Füllstand bis zu einem gefüllten Zustand mit Schüttgut nachfüllt und mit einem Sensor für einen Parameter zur ausgegebenen Nachfüllmenge versehen ist, und wobei während der Nachfüllung der Ausgabe-Förderer durch ein volumetrisches Steuermodell angesteuert wird, **dadurch gekennzeichnet, dass** das während der Nachfüllung des Vorratsbehälters (4) in diesen nachgefüllte Schüttgutgewicht aus den Daten des Sensors für die aus der Nachfüllstation ausgegebene Nachfüllmenge und die während der Nachfüllung des Vorratsbehälters (4) erfolgte Zunahme des Schüttgutgewichts im Vorratsbehälter (4) bestimmt wird und aus der Differenz dieser Gewichte der während der Nachfüllung ausgegebene Ist-Schüttgutstrom berechnet wird.

2. Verfahren nach Anspruch 1, wobei weiter zur Regelung des Massenstroms aus der Differenz zwischen einem Soll - Schüttgutstrom und dem Ist-Schüttgutstrom ein Korrekturfaktor für das volumetrische Steuermodell generiert und auf dieses angewendet wird.

3. Verfahren nach Anspruch 1 oder 2, wobei während der Nachfüllung wenigstens einmal, bevorzugt wiederholt, der Ist-Schüttgutstrom bestimmt und/oder der Korrekturfaktor generiert wird, und wobei der jeweils bestimmte Korrekturfaktor in Echtzeit auf das volumetrische Steuermodell angewendet wird.

4. Verfahren nach Anspruch 3, wobei, das nachgefüllte Schüttgutgewicht als Abnahme des Gewichts des Nachfüllbehälters (3) und die von der wenigstens einen gravimetrischen Waage (11) registrierte Zunahme des Schüttgutgewichts im Vorratsbehälter (4) für die Berechnung des Ist-Schüttgutstroms zeitgleich oder mit einer Zeitdifferenz verarbeitet werden, wobei bevorzugt die Zeitdifferenz wenigstens angenähert einer Fallzeit des Schüttguts vom Nachfüllbehälter (3) in den Vorratsbehälter (4) entspricht.

5. Verfahren nach Anspruch 3, wobei während der Nachfüllung die Zunahme des Schüttgutgewichts im Vorratsbehälter (4) über ein von Störungen bereinigtes Schüttgutgewicht berechnet wird.

6. Verfahren nach Anspruch 5, wobei das bereinigte Schüttgutgewicht mit Hilfe eines im Vorratsbehälter (4) herrschenden aktuellen Drucks berechnet wird.

7. Verfahren nach Anspruch 5, wobei das bereinigte Schüttgutgewicht mit Hilfe eines in der Ableitung (9) aktuell herrschenden Drucks berechnet wird.

8. Verfahren nach Anspruch 5, wobei während der Nachfüllung das bereinigte Schüttgutgewicht durch die über den Impuls des herabstürzenden Schüttguts auf den Vorratsbehälter (4) ausgeübte Kraft berechnet wird.

9. Verfahren nach Anspruch 5 oder 8, wobei das bereinigte Schüttgutgewicht über die Schwingungseigenschaften der wenigstens einen gravimetrischen Waage (11) berechnet wird.

10. Verfahren nach Anspruch 2, wobei der Ist-Schüttgutstrom und/oder der Korrekturfaktor nach einer Nachfüllung, aber vor der nachfolgenden Nachfüllung bestimmt und auf das volumetrische Steuermodell für eine nächste Nachfüllung angewendet wird, wobei bevorzugt der Korrekturfaktor während mehreren Nachfüllungen basierend auf einem vorangehenden Korrekturfaktor neu bestimmt wird.

11. Verfahren nach Anspruch 1 oder 2, wobei das volumetrische Steuermodell den vom Ausgabe-Förderer erzeugten Massenstrom über einen vorbestimmten Wert für einen Soll-Massenstrom steuert.

12. Verfahren nach Anspruch 1 oder 2, wobei das volumetrische Steuermodell den vom Ausgabe-Förderer erzeugten Massenstrom zusätzlich durch Daten zur Verdichtung des Schüttguts während der Leerung des Vorratsbehälters (4) steuert.

13. Gravimetrischer Dosierer (1) für Schüttgüter mit einer mit ihm verbundenen Nachfüllstation (2), wobei der Dosierer (1) einen Vorratsbehälter (4) für das zu dosierende Schüttgut aufweist und die Nachfüllstation (2) ausgebildet ist, eine Nachfüllmenge von Schüttgut in den Vorratsbehälter (4) des Dosierers (1) nachzufüllen und mit einem Sensor für einen Parameter zur Nachfüllmenge versehen ist, wobei der Dosierer (1) mit mindestens einer gravimetrischen Waage (11), die betriebsfähig mit dem Vorratsbehälter (4) und einem Ausgabe-Förderer für das Schüttgut zur gravimetrischen Dosierung des Schüttguts verbunden ist, und weiter mit einer Steuerung (10) für den Ausgabe-Förderer, die ausgebildet ist, diesen während einer Nachfüllphase gemäss einem volumetrischen Steuermodell anzusteuern, versehen ist, **dadurch gekennzeichnet, dass** die Steuerung weiter ausgebildet ist, während der Nachfüllung aus den Signalen des Sensors zur Nachfüllmenge das von der Nachfüllstation (2) ausgegebene Schüttgutgewicht, und aus dem Gewichtssignal der mindestens einen gravimetrischen Waage (11) einen Wert für das Gewicht des im Vorratsbehälter (4) aktuell vorhandenen Schüttguts und daraus einen während der Nachfüllung vom Dosierer ausgegebenen Ist-Schüttgutstrom zu bestimmen.

14. Gravimetrischer Dosierer nach Anspruch 13, wobei die Steuerung weiter ausgebildet ist, aus der Differenz zwischen einem Soll - Schüttgutstrom und dem Ist-Schüttgutstrom einen Korrekturfaktor für das volumetrische Steuermodell zu bestimmen und auf dieses anzuwenden.

15. Gravimetrischer Dosierer nach Anspruch 13 oder 14, wobei der Sensor für einen Parameter der Nachfüllmenge als Gewichtssensor (14) ausgebildet ist.

16. Gravimetrischer Dosierer nach Anspruch 13 oder 14, wobei der Vorratsbehälter (4) und/oder eine nach dem Ausgabe-Förderer angeordnete Ausgabeleitung (9) für Schüttgut mit einem Drucksensor (20,21) versehen ist, der ausgebildet ist, während der Nachfüllung des Vorratsbehälters (4) ein Signal für eine Druckschwankung zu generieren, und wobei die Steuerung (10) weiter ausgebildet ist, aus dem Signal für die Druckschwankung und dem Signal der wenigstens einen gravimetrischen Waage (11) einen um die Druckschwankung bereinigten Wert für das Gewicht des im Vorratsbehälter (4) aktuell vorhandenen Schüttguts zu bestimmen.

17. Gravimetrischer Dosierer nach Anspruch 13 oder 14, wobei die Steuerung (10) ausgebildet ist, ein um den Impuls des in den Vorratsbehälter herabfallenden Schüttguts bereinigtes Schüttgutgewicht im Vorratsbehälter (4) zu bestimmen.

18. Gravimetrischer Dosierer nach Anspruch 13 oder 14, wobei die Steuerung (10) ausgebildet ist, ein um eine virtuelle Kraft aus dem dynamischen Verhalten der durch den Impuls des in den Vorratsbehälter (4) herabfallenden Schüttguts oszillierenden mindestens einen gravimetrischen Waage (11) bereinigtes Schüttgutgewicht im Vorratsbehälter (4) zu bestimmen.

19. Gravimetrischer Dosierer nach Anspruch 13 oder 14, wobei die Steuerung (10) weiter ausgebildet ist, den Ist-Schüttgutstrom und/oder den Korrekturfaktor während der Nachfüllung mehrfach zu bestimmen und im Fall des bestimmten Korrekturfaktors diesen in Echtzeit auf das volumetrische Steuermodell anzuwenden, derart, dass dessen Wert für den Soll-Schüttgutstrom während der Nachfüllung angepasst wird.

20. Gravimetrischer Dosierer nach Anspruch 13 oder 14, wobei die Steuerung (10) ausgebildet ist, aus den Signalen des Sensors für einen Parameter zur ausgegebenen Nachfüllmenge einen Wert für das Gewicht des insgesamt während einer Nachfüllung nachgefüllten Schüttguts zu bestimmen und aus einem Gewichtssignal der mindestens einen gravimetrischen Waage (11) während der auf die Nachfüllung folgenden Leerung des Vorratsbehälters (4) Ist-Schüttgutstrom und/oder einen einen Korrekturfaktor zu bestimmen und im Fall des bestimmten Korrekturfaktors diesen diesen für eine folgende Nachfüllung auf das volumetrische Steuermodell anzuwenden.

## Claims

1. Method for determining the mass flow of a dosing device (1) for bulk materials, which has a storage container (4), the storage container (4) of the dosing device (1) being connected to a refilling station (2) having a refilling container (3), wherein the doser (1) has at least one gravimetric scale (11) for gravimetric dosing via a discharge conveyor of the doser (1), and the refill container (3) periodically refills the supply container (4) with bulk material from a lower filling level to a filled state and is provided with a sensor for a parameter for the refill quantity dispensed, and wherein, during refilling, the output conveyor is controlled by a volumetric control model, **characterized in that** the weight of bulk material refilled into the storage container (4) during refilling is determined from the data of the sensor for the refilling quantity output from the refilling station and the increase in the weight of bulk material in the storage container (4) during refilling of the storage container (4), and the actual bulk material flow output during refilling is calculated from the difference between these weights.

2. method according to claim 1, wherein further for controlling the mass flow a correction factor for the volumetric control model is generated from the difference between a desired bulk material flow and the actual bulk material flow and applied to this.

3. method according to claim 1 or 2, wherein the actual bulk material flow is determined and/or the correction factor is generated at least once, preferably repeatedly, during refilling, and wherein the correction factor determined in each case is applied to the volumetric control model in real time.

4. method according to claim 3, wherein the refilled bulk material weight as a decrease in the weight of the refill container (3) and the increase in the bulk material weight in the storage container (4) registered by the at least one gravimetric scale (11) are processed simultaneously or with a time difference for the calculation of the actual bulk material flow, wherein preferably the time difference corresponds at least approximately to a falling time of the bulk material from the refill container (3) into the storage container (4).

5. method according to claim 3, wherein during refilling the increase in the bulk material weight in the storage container (4) is calculated using a bulk material weight adjusted for disturbances.

6. method according to claim 5, wherein the adjusted bulk material weight is calculated with the aid of a current pressure prevailing in the storage container (4).

7. method according to claim 5, wherein the adjusted bulk density is calculated with the aid of a pressure currently prevailing in the derivation (9).

8. method according to claim 5, wherein during refilling the adjusted bulk material weight is calculated by the force exerted on the storage container (4) via the momentum of the falling bulk material.

9. method according to claim 5 or 8, wherein the adjusted bulk material weight is calculated via the vibration characteristics of the at least one gravimetric scale (11).

10. method according to claim 2, wherein the actual bulk material flow and/or the correction factor is determined after a refill but before the subsequent refill and is applied to the volumetric control model for a next refill, preferably the correction factor is redetermined during several refills based on a preceding correction factor.

11. The method according to claim 1 or 2, wherein the volumetric control model controls the mass flow generated by the output conveyor via a predetermined value for a target mass flow.

12. method according to claim 1 or 2, wherein the volumetric control model additionally controls the mass flow generated by the output conveyor by means of data on the compaction of the bulk material during the emptying of the storage container (4).

13. Gravimetric dosing device (1) for bulk materials with a refilling station (2) connected thereto, wherein the dosing device (1) has a storage container (4) for the bulk material to be dosed and the refilling station (2) is designed to refill a refill quantity of bulk material into the storage container (4) of the dosing device (1) and is provided with a sensor for a parameter for the refill quantity, refilling a refill quantity of bulk material into the storage container (4) of the doser (1) and is provided with a sensor for a parameter for the refill quantity, wherein the doser (1) is connected to at least one gravimetric scale (11), which is operatively connected to the storage container (4) and a discharge conveyor for the bulk material for gravimetric dosing of the bulk material, and further provided with a controller (10) for the output conveyor, which is designed to control the latter during a refilling phase in accordance with a volumetric control model, **characterized in that** the controller is further designed to determine the weight of the bulk material output by the refilling station (2) from the signals of the sensor for the refilling quantity during refilling, and from the weight signal of the at least one gravimetric scale (11) to determine a value for the weight of the bulk material currently present in the storage container (4) and from this to determine an actual bulk material flow output by the dosing unit during refilling.

14. gravimetric feeder according to claim 13, wherein the control system is further designed to determine a correction factor for the volumetric control model from the difference between a desired bulk material flow and the actual bulk material flow and to apply this to the volumetric control model.

15. gravimetric dispenser according to claim 13 or 14, wherein the sensor for a parameter of the refill quantity is designed as a weight sensor (14).

16. Gravimetric feeder according to claim 13 or 14, wherein the storage container (4) and/or a discharge line (9) for bulk material arranged downstream of the discharge conveyor is provided with a pressure sensor (20, 21) which is designed to generate a signal for a pressure fluctuation during refilling of the storage container (4), and wherein the controller (10) is further designed to determine a value, adjusted for the pressure fluctuation, for the weight of the bulk material currently present in the storage container (4) from the signal for the pressure fluctuation and the signal of the at least one gravimetric scale (11).

17. gravimetric feeder according to claim 13 or 14, wherein the controller (10) is designed to determine a bulk material weight in the storage container (4) adjusted by the momentum of the bulk material falling into the storage container.

18. gravimetric dispenser according to claim 13 or 14, wherein the controller (10) is designed to determine a bulk material weight in the storage container (4) adjusted by a virtual force from the dynamic behavior of the at least one gravimetric scale (11) oscillating due to the momentum of the bulk material falling into the storage container (4).

19. gravimetric dosing unit according to claim 13 or 14, wherein the control unit (10) is further designed to determine the actual bulk material flow and/or the correction factor several times during refilling and, in the case of the determined correction factor, to apply it in real time to the volumetric control model such that its value for the target bulk material flow is adjusted during refilling.

20. Gravimetric dispenser according to claim 13 or 14, wherein the controller (10) is designed to determine from the signals of the sensor for a parameter for the dispensed refill quantity a value for the weight of the total bulk material refilled during a refill and to determine from a weight signal of the at least one gravimetric scale (11) during the emptying of the storage container (4) following the refill actual bulk material flow and/or a correction factor and, in the case of the determined correction factor, to apply this to the volumetric control model for a subsequent refill.

## Revendications

1. Procédé pour déterminer le débit massique d'un doseur (1) pour des produits en vrac, qui présente un réservoir de stockage (4), le réservoir de stockage (4) du doseur (1) étant relié à une station de remplissage (2) présentant un réservoir de recharge (3), le doseur (1) présentant au moins une balance gravimétrique (11) pour le dosage gravimétrique par l'intermédiaire d'un convoyeur de sortie du doseur (1), et le réservoir de remplissage (3) remplissant périodiquement le réservoir de stockage (4) d'un niveau de remplissage inférieur jusqu'à un état rempli de produit en vrac et étant pourvu d'un capteur pour un paramètre concernant la quantité de remplissage délivrée, et dans lequel, pendant le remplissage, le convoyeur de sortie est commandé par un modèle de commande volumétrique, **caractérisé en ce que** le poids de produit en vrac rempli dans le réservoir (4) pendant le remplissage de celui-ci est déterminé à partir des données du capteur pour la quantité de remplissage sortie du poste de remplissage et de l'augmentation du poids de produit en vrac dans le réservoir (4) pendant le remplissage du réservoir (4), et **en ce que** le flux réel de produit en vrac sorti pendant le remplissage est calculé à partir de la différence entre ces poids.

2. Procédé selon la revendication 1, dans lequel, en outre, pour la régulation du débit massique, un facteur de correction est généré pour le modèle de commande volumétrique à partir de la différence entre un débit de consigne de produit en vrac et le débit réel de produit en vrac et est appliqué à celui-ci.

3. Procédé selon la revendication 1 ou 2, dans lequel, pendant le remplissage complémentaire, le débit réel du produit en vrac est déterminé au moins une fois, de préférence de manière répétée, et/ou le facteur de correction est généré, et dans lequel le facteur de correction respectivement déterminé est appliqué en temps réel au modèle de commande volumétrique.

4. Procédé selon la revendication 3, dans lequel le poids de produit en vrac rechargé en tant que diminution du poids du récipient de recharge (3) et l'augmentation du poids de produit en vrac dans le réservoir (4) enregistrée par la au moins une balance gravimétrique (11) sont traités simultanément ou avec une différence de temps pour le calcul du flux de produit en vrac réel, la différence de temps correspondant de préférence au moins approximativement à un temps de chute du produit en vrac du récipient de recharge (3) dans le réservoir (4).

5. Procédé selon la revendication 3, dans lequel, pendant le remplissage, l'augmentation de la densité du produit en vrac dans le réservoir de stockage (4) est calculée par l'intermédiaire d'une densité du produit en vrac corrigée des perturbations.

6. Procédé selon la revendication 5, dans lequel la densité en vrac corrigée est calculée à l'aide d'une pression réelle régnant dans le réservoir (4).

7. Procédé selon la revendication 5, dans lequel la masse en vrac corrigée est calculée à l'aide d'une pression régnant actuellement dans la dérivation (9).

8. Procédé selon la revendication 5, dans lequel, pendant le remplissage complémentaire, le poids corrigé du produit en vrac est calculé par la force exercée sur le réservoir (4) par l'intermédiaire de l'impulsion du produit en vrac qui tombe.

9. Procédé selon la revendication 5 ou 8, dans lequel la masse en vrac corrigée est calculée par l'intermédiaire des propriétés d'oscillation de ladite au moins une balance gravimétrique (11).

10. Procédé selon la revendication 2, dans lequel le débit de produit en vrac réel et/ou le facteur de correction est déterminé après un remplissage mais avant le remplissage suivant et est appliqué au modèle de commande volumétrique pour un remplissage suivant, de préférence le facteur de correction étant redéterminé pendant plusieurs remplissages sur la base d'un facteur de correction précédent.

11. Procédé selon la revendication 1 ou 2, dans lequel le modèle de commande volumétrique commande le débit massique généré par le convoyeur de sortie au-dessus d'une valeur prédéterminée pour un débit massique cible.

12. Procédé selon la revendication 1 ou 2, dans lequel le modèle de commande volumétrique commande en outre le débit massique généré par le convoyeur de sortie au moyen de données concernant le compactage du produit en vrac pendant le vidage du réservoir (4).

13. Doseur gravimétrique (1) pour produits en vrac avec une station de remplissage (2) reliée à celui-ci, le doseur (1) présentant un réservoir (4) pour le produit en vrac à doser et la station de remplissage (2) étant conçue, de remplir une quantité supplémentaire de produit en vrac dans le réservoir (4) du doseur (1) et est pourvu d'un capteur pour un paramètre concernant la quantité supplémentaire, le doseur (1) étant relié à au moins une balance gravimétrique (11), qui est reliée de manière opérationnelle au réservoir (4) et à un convoyeur de distribution pour le produit en vrac pour le dosage gravimétrique du produit en vrac, et est en outre pourvu d'une commande (10) pour le convoyeur de sortie, qui est conçue pour commander celui-ci pendant une phase de remplissage selon un modèle de commande volumétrique, **caractérisé en ce que** la commande est en outre conçue pour déterminer, pendant le remplissage, le poids du produit en vrac délivré par le poste de remplissage (2) à partir des signaux du capteur de la quantité de remplissage, et à partir du signal de poids de l'au moins une balance gravimétrique (11), de déterminer une valeur pour le poids du produit en vrac actuellement présent dans le réservoir (4) et, à partir de là, un flux réel de produit en vrac délivré par le doseur pendant le remplissage.

14. Doseur gravimétrique selon la revendication 13, dans lequel la commande est en outre conçue pour déterminer un facteur de correction pour le modèle de commande volumétrique à partir de la différence entre un débit de produit en vrac de consigne et le débit de produit en vrac réel et pour l'appliquer à celui-ci.

15. Doseur gravimétrique selon la revendication 13 ou 14, dans lequel le capteur pour un paramètre de la quantité de remplissage est conçu comme un capteur de poids (14).

16. Doseur gravimétrique selon la revendication 13 ou 14, dans lequel le réservoir (4) et/ou une conduite de sortie (9) pour le produit en vrac disposée après le convoyeur de sortie est pourvu d'un capteur de pression (20, 21) qui est conçu pour générer un signal pour une fluctuation de pression pendant le remplissage du réservoir (4), et la commande (10) étant en outre conçue pour déterminer, à partir du signal pour la variation de pression et du signal de l'au moins une balance gravimétrique (11), une valeur corrigée de la variation de pression pour le poids du produit en vrac actuellement présent dans le réservoir de stockage (4).

17. Doseur gravimétrique selon la revendication 13 ou 14, dans lequel la commande (10) est conçue pour déterminer un poids de produit en vrac dans le réservoir (4) corrigé de l'impulsion du produit en vrac tombant dans le réservoir.

18. Doseur gravimétrique selon la revendication 13 ou 14, dans lequel la commande (10) est conçue pour déterminer un poids de produit en vrac dans le réservoir (4) corrigé d'une force virtuelle provenant du comportement dynamique de la ou des balances gravimétriques (11) oscillant sous l'impulsion du produit en vrac tombant dans le réservoir (4).

19. Doseur gravimétrique selon la revendication 13 ou 14, dans lequel la commande (10) est en outre conçue pour déterminer plusieurs fois le débit en vrac réel et/ou le facteur de correction pendant le remplissage et, dans le cas du facteur de correction déterminé, pour appliquer celui-ci en temps réel au modèle de commande volumétrique de telle sorte que sa valeur pour le débit en vrac de consigne soit adaptée pendant le remplissage.

20. Doseur gravimétrique selon la revendication 13 ou 14, dans lequel la commande (10) est conçue pour déterminer, à partir des signaux du capteur pour un paramètre relatif à la quantité de remplissage délivrée, une valeur pour le poids du produit en vrac total rempli pendant un remplissage et pour déterminer, à partir d'un signal de poids de l'au moins une balance gravimétrique (11), pendant le vidage du réservoir (4) qui suit le remplissage, un débit de produit en vrac réel et/ou un facteur de correction et, dans le cas du facteur de correction déterminé, pour appliquer celui-ci au modèle de commande volumétrique pour un remplissage suivant.
